# EUROPEAN PATENT APPLICATION

(11) **EP 1 600 845 A1**
(43) Date of publication of application: **30.11.2005**
(21) Application number: 04253195.4
(22) Date of filing: 28.05.2004
(51) Int. Cl.: G06F 1/32, G06F 9/38

(54) **Processor with power saving circuitry**

(71) Applicant: STMicroelectronics Limited, Almondsbury, Bristol BS32 4SQ (GB)
(72) Inventor: Holmwood, Mark Owen, Somerset BS25 1NH (GB)
(74) Representative: Style, Kelda Camilla Karen

(57) **Abstract**

This invention relates to a processor circuitry comprising execution circuitry, at least one interrupt controller and an idle monitor, said monitor arranged to determine when said pipeline is idle by detecting an opcode and to determine if said execution circuitry is able to enter the idle state and if so to generate a signal to cause at least the execution circuitry to enter said idle state.

## Description

### Field of the Invention

The present invention relates to processor circuitry and to a method of controlling processor circuitry.

### Background of the invention

Integrated circuits are being used in a range of portable devices. Portable devices are generally powered by a battery supply. Power consumption is an important consideration in such devices as this will effect the frequency required for battery replacement or recharging.

Complex integrated circuits have different packaging depending on the power dissipation required. If the power consumption is relatively high, then expensive packaging is required. Cheaper packaging can be used if the power consumption is lower.

Known integrated circuits have a processor which have an execution pipeline. The execution pipeline and associated circuitry can enter an idle state. With known processors, the processor can enter an idle state. This is done in one known system by setting an external bit or register outside the processor. Another system has an explicit stop instruction which needs to be used.

Both of these methods are disadvantageous in that the implementation is complicated. For example the stop instruction is not a standard instruction in languages such as C or C++. This means that a library needs to be included with this instruction so that it can be understood. The use of external registers is again disadvantageous in that the registers need to be provided. Additionally the programming of the processor using the registers is complicated.

Another problem relates to the testing of the processor and in particular how to test that the processor has entered the idle state.

### Summary of the invention

It is the aim of embodiments of the present invention to address one or more of the problems discussed previously.

According to a first aspect of the present invention there is provided a processor circuitry comprising:
execution circuitry;
at least one interrupt controller; and
an idle monitor, said monitor arranged to determine when said pipeline is idle by detecting an opcode and to determine if said execution circuitry is able to enter the idle state and if so to generate a signal to cause at least the execution circuitry to enter said idle state.

According to another aspect of the invention, there is provided a method of controlling processor circuitry comprising execution circuitry and at least one interrupt controller, said method comprising the steps of:
determining if said pipeline is idle by detecting an opcode;
if so to determine if said execution circuitry is able to enter the idle state; and
if so to generate a signal to cause at least the execution circuitry to enter said idle state.

### Brief description of Figure

For a better understanding of the present invention and as to how the same may be carried into effect, reference will now be made by way of example to the accompanying drawings in which:

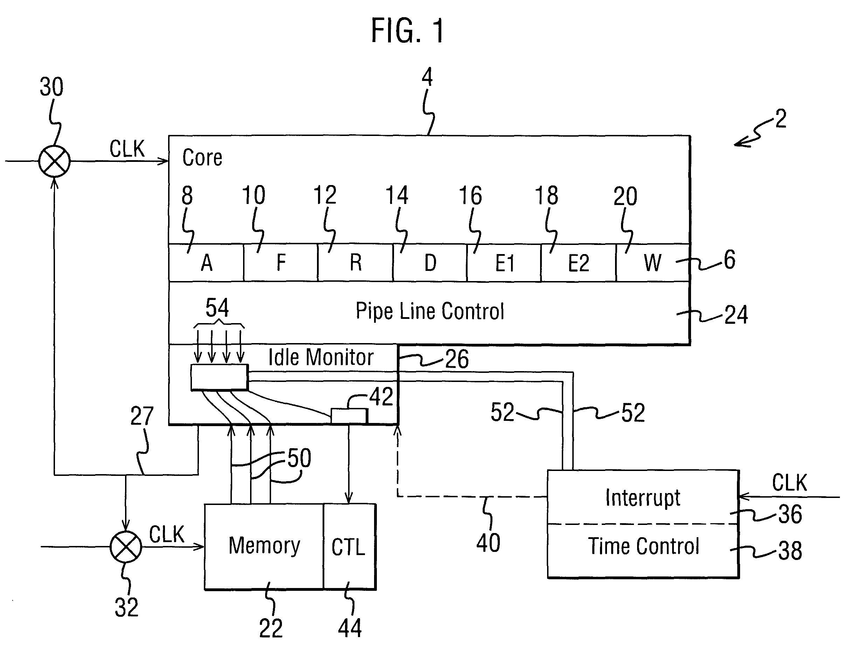

Figure 1 shows a block diagram of circuitry embodying the present invention.

### Detailed description of embodiments of the present invention

Reference will now be made to Figure 1 which shows schematically processing circuitry 2. This circuitry 2 is provided on an integrated circuit. However it should be appreciated that in alternative embodiments of the present invention, the techniques of the present invention can be used off chip.

Preferred embodiments of the invention use CMOS (Complementary Metal Oxide Semiconductor) technology. However it should be appreciated that alternative embodiments of the present invention can be implemented using any other suitable technology.

The circuitry 2 comprises a processing core 4. The processing core 4 has several functions which are illustrated schematically in Figure 1. The processing core 4 is shown as having one execution pipeline 6. In some embodiments of the present invention more than one pipeline may be provided. The pipeline illustrated in Figure 1 is a simple pipeline and in some embodiments of the present invention, the pipeline may have more stages, less stages and/or one or more branches.

The pipeline 6 has seven stages. The first stage 8 is the address stage where address information is provided.

The second stage 10 is the fetch stage where the instruction is fetched.

In the third stage 12, the read stage, data stored at the provided addresses is fetched from a memory 22. The memory 22 is external to the core but part of the integrated circuit. In alternative embodiments of the invention the memory may be off chip. In the arrangement shown in Figure 1, a single memory is provided. In alternative embodiments of the invention, more than one memory may be provided.

In the fourth stage 14, the fetched data is decoded.

In the fifth and sixth stages 16 and 18, two operations are executed. For example value A could be added to value B in the first execution stage and in the second execution stage the result is added to a third value C.

In the final stage 20, the result is written back into the memory.

The pipeline is controlled by pipeline control 24. The pipeline control is also arranged to provide signals to an idle monitor 26. The idle monitor 26 has a state machine 28 which receives inputs from the pipeline control 24. The idle monitor and in particular the state machine receives the following inputs:
Inputs 50 from the memory - these indicate either if there are any pending memory transactions or if all memory transactions are completed. For example, these inputs will indicate if a write or read operation is pending or completed;
Inputs 52 from the interrupt controller indicating if there are any interrupts pending; and
Inputs 54 from the pipeline control indicating which of the stages are in an idle state. To enter the idle state, the entire pipeline must be in the idle mode.

The state machine can check that all of the stages of the pipeline are idle. In an alternative embodiment of the invention the state machine can check just the final stage. If the final stage is idle, then the other stages will also be idle.

If there are other elements in the circuitry that potentially can also enter the idle state, inputs may be received from those other elements indicating if they are unable to prevent the idle state.

Alternatively or additionally, checks can be made to ensure that all write and/or read buffers are flushed and/or all acknowledgments are returned before the idle state is entered. Checking for acknowledgments may be one way of for example checking that all memory transactions are completed and/or no interrupts are pending.

Alternatively or additionally, checks can be made to ensure that no exceptions are pending before the idle state is entered.

The idle mode in the pipeline is identified by identifying the opcode (operation code) indicating an empty idle loop which is a single instruction, not conditional and which branches to itself, in one embodiment of the invention. In one embodiment using C programming language, a given stage of the execution pipeline is identified as being in an idle state by identifying the opcode: idle: br idle. Br means "branch to". When an operation is completed, the stage will branch to itself waiting for an interrupt.

This embodiment has the advantage that the idle state can be easily implemented by controlling the programming of the circuitry by use of an instruction such as idle: go to idle. In other words, when the idle state is detected in the pipeline go to the idle state, subject to the checks mentioned previously.

In embodiments of the invention, this opcode is identified. When the opcode is identified, checks are then made to see if the idle state can in fact be entered. These checks include checking to see if any interrupts are pending and if any memory transactions are pending.

Embodiments of the invention can be used with any other suitable programming language such as C++. Embodiments of the invention are simple to invoke. No knowledge or explicit library is required in order to carry out embodiments of the present invention.

If there are any performance monitors which are switched on, for example to count cache misses or count cycles, the idle state cannot be entered.

The interrupt controller shown in Figure 1 has two parts. The first part 36 provides the interrupts and the second part 38 provides time control. The interrupt controller cannot enter the idle state as it is required to reactivate the circuitry in the idle state.

The control signal 27 provided by the idle monitor is arranged to stop the clock signal from being applied to the memory and the core. The control signal 27 is input to each of two NOR gates 30 and 32. The first NOR gate 30 also has an input from the clock signal used in the core 4 and an output connected to the core. The second NOR gate 32 also has an input from the clock used to control the memory and an output connected to the memory. When the control signal 27 is asserted, this causes the output of each of the NOR gates to be low, regardless of the state of the clock. This means that no clock signal is applied to the core and the memory.

By effectively switching off the clock, this will significantly reduce the power consumption of the core, memory and the time control part of the interrupt controller. In some embodiments of the invention, up to around 95% of power consumption is the result of clocking. If the clock signal is switched off, there will be a considerable reduction in the power consumption.

In alternative embodiments of the invention, additional or alternative power reduction methods may be implemented on the entering the idle mode. For example, the voltage supplied to circuits may be reduced as this will reduce power consumption.

It should be appreciated that in preferred embodiments of the invention, all state in the core and memory will be preserved while those elements are in the idle state.

Once the core 4 and memory have entered the idle state, only a signal 40 from the interrupt controller 36 to the idle monitor will cause those components to enter the non idle or active state. The interrupt generated by the interrupt controller can take any suitable form. For example, the interrupt can be for example every n microseconds check for key actuation, or check if a peripheral is switched on or the like.

In order to be able to test that the power down mode is working correctly, the idle monitor has a store 42 which is arrange to store a single bit. In alternative embodiments more than one bit is provided. The bit will have an initial value which is changed by the state machine 28 when the state machine 28 determines that the core and memory is to enter the idle state. For example the initial value may be "0". At the same time or just before the state machine 28 generates the signal 27 to switch off the clocks, a value "1" is written into the store 42.

When the core and memory is switched back on again, the value in the store 42 is written to the control part 44 of the memory 22. The control part 44 of the memory thus will contain a record of the number of times that the idle state is entered. The store 42 is updated to contain the initial value.

In one modification to the invention, the initial value may be "1". In another modification, the store 42 can be dispensed with and the value indicating that the idle state has been entered may be written directly to the control part 44 of the memory. In one modification to the invention, the signal 27 used to switch off the clock signal may be used to update the value in store 42. In this case, it may be necessary to have a delay to prevent the clocks from being switched off before the value has been written into the store 42.

In one embodiment of the invention, the information indicating that the idle state has been entered is stored along with the results of performance monitoring parameters.

In alternative embodiments of the invention, a debug interrupt controller is provided. The core can be woken up by the debug interrupt controller. The debug interrupt controller itself will not go into the idle state.

In alternative embodiments of the invention, additional circuitry may be provided such as a peripheral or the like. The additional circuitry may also enter the idle state. The additional circuitry may be arranged to provide inputs to the idle monitor to ensure that the additional circuitry is able to enter the idle state.

The preferred embodiments of the present invention have a number of elements entering the idle state at the same time. It should be appreciated that in some embodiments of the invention, it is possible that only some elements which are capable of entering the idle state, enter the idle state with other elements capable of entering the idle state remaining active.

Embodiments of the present invention are provided in processors. Embodiments of the present invention are preferably implemented in integrated circuits.

Embodiments of the present invention can be incorporated in any suitable device. Embodiments of the present invention are particularly useful in handheld devices and in particular but not exclusively in handheld devices which are battery operated. Examples of such devices include personal organisers, telephones, handheld set top boxes, DVD or CD players, cameras, portable computers and any other consumer product. Embodiments of the present invention can be incorporated in for example cars, coaches or planes. For example, DVD players, navigational devices, radios, car control systems or any other device.

Embodiments of the invention can be used in any environment where energy consumption and in particular the reduction thereof is of concern. Given environmental concerns, this means that embodiments of the invention are also applicable to mains powered devices or the like.

## Claims

1. Processor circuitry comprising:
execution circuitry (6);
at least one interrupt controller (36); and
an idle monitor (26), said monitor arranged to determine when said pipeline is idle by detecting an opcode and to determine if said execution circuitry (6) is able to enter the idle state and if so to generate a signal (27) to cause at least the execution circuitry to enter said idle state.

2. Circuitry as claimed in claim 1, wherein said idle monitor (26) is arranged to in said determination if the execution circuitry (6) is able to enter the idle state to check at least one of the following:
That no interrupts are pending;
That no exceptions are pending;
All memory transactions are complete;
All acknowledgments are returned; and
All write buffers are flushed.

3. Circuitry as claimed in claim 1 or 2, wherein said execution circuitry (6) comprises at least one execution pipeline.

4. Circuitry as claimed in any preceding claim, wherein said interrupt controller (36) is arranged to provide a signal (40) to cause said at least the execution circuitry to enter an active mode after said idle state.

5. Circuitry as claimed in any preceding claim, wherein said signal (27) is arranged to prevent a clock signal from being applied to said at least the execution circuitry.

6. Circuitry as claimed in any preceding claim, wherein said signal is arranged to cause a reduction of power consumption during the idle state.

7. Circuitry as claimed in any preceding claim, wherein said signal (27) is arranged to cause said execution circuitry and a memory (22) to enter said idle state.

8. Circuitry as claimed in any preceding claim, wherein said idle monitor (26) is arranged to provide information indicating that said at least the execution circuitry has entered said idle state.

9. Circuitry as claimed in claim 8, wherein said information is stored in at least one of a store (42,44) in said idle monitor (26) and a memory (22).

10. Circuitry as claimed in claim 8 or 9, wherein said signal (27) is arranged to cause said information to be stored.

11. Circuitry as claimed in any preceding claim, wherein said opcode indicates an empty idle loop.

12. Circuitry as claimed in any preceding claim, wherein said opcode comprises a single instruction which is not conditional and which branches to itself.

13. Circuitry as claimed in any preceding claim, wherein said circuitry is programmed to enter said idle state by an opcode.

14. An integrated circuit comprising circuitry as claimed in any preceding claim.

15. A handheld device incorporating circuitry as claimed in any preceding claim.

16. A consumer product incorporating circuitry as claimed in any preceding claim.

17. A method of controlling processor circuitry comprising execution circuitry and at least one interrupt controller, said method comprising the steps of:
determining if said pipeline is idle by detecting an opcode;
if so to determine if said execution circuitry is able to enter the idle state; and
if so to generate a signal to cause at least the execution circuitry to enter said idle state.
